# EUROPEAN PATENT APPLICATION

(11) **EP 4 818 085 A1**
(43) Date of publication of application: **07.10.2026**
(21) Application number: 26162282.3
(22) Date of filing: 04.03.2026
(51) Int. Cl.: B65G 47/08, B65G 47/90

(54) **MANIPULATOR APPARATUS FOR HANDLING ARTICLES WITH VARIABLE GEOMETRY AND RELATED METHOD**

(30) Priority: 07.03.2025 IT 202500004842
(71) Applicant: Mako S.r.l., 43010 Fontevivo (PR) (IT)
(72) Inventor: ABRETTI, Luca, Montecchio Emilia (RE) (IT)
(74) Representative: Silva, Valentina

(57) **Abstract**

Manipulator apparatus (100) for handing articles to bring said articles from an initial arrangement to a final arrangement by means of a movement on a support surface (150) so that a lower face (220) thereof is always adhering to said surface (150), comprising a handling device (120) adapted to move a gripper (110) above said support surface (150) and preferably to rotate it about an axis of rotation perpendicular to said surface (150), said gripper (110) comprising opposite side rails (111, 112) engaging on a side surface (210) of said one or more articles (200), said side rails (111, 112) mainly extend in height (113) according to a vertical direction (Z) and in length (114) according to a longitudinal direction (X), wherein said side rails (111, 112), automatically vary their length (114) between a minimum and a maximum dimension.

## Description

### FIELD OF APPLICATION OF THE INVENTION

The present invention relates to the field of machines or apparatuses for forming layers of articles.

In particular, these are machines that make it possible to arrange articles according to formation patterns designed to form layers of articles suitable to be subsequently gripped or arranged on specific supports. Said layers are generally formed to be subsequently stacked so as to make a pallet.

More precisely, the invention relates to a manipulator to bring said articles from an initial arrangement to a final arrangement, by moving them over a support surface on which a layer of articles according to a specific palletising pattern is created.

### PRIOR ART

Devices for handling articles and forming layers of articles, also known as manipulators, are known in the state of the art.

Said manipulators generally comprise one or more grippers configured to simultaneously engage with one or more articles and move them by making them slide on a support surface.

Said manipulators are often present in packaging and palletising lines.

Articles or packages coming from the packaging or processing step are transferred onto conveyor belts or other transit or transfer devices, where they are arranged and placed in order. The layer preparation is usually managed by a series of manipulators or equipment that orient and position the single articles on preparation belts or tables. These are then picked up by the palletiser or palletising robot.

The step of defining the palletising pattern is based on arrangements that depend on both the dimensions of the product and on those of the support on which it will be placed.

In order to define the palletising pattern, the marketing strategies of the end customers, which are analysed to make the article more or less visible, also count.

The task of said manipulator is to rotate, orient and move the packages to ensure correct arrangement thereof. Known solutions that are commonly adopted for this step are divided in two main categories:
- Row-based preparation
- Full-layer preparation

Specifically, in the first category of row-based preparation, a single row, or more rows of articles are arranged according to the palletising pattern and are then grouped to form the layer in a dedicated station to be subsequently transferred to the warehouse.

This approach therefore requires an additional step of grouping the single rows, for example, by means of pushers or other devices.

Generally, rows are formed according to a direction given by the axis of the input transports, while grouping requires to be manipulated perpendicularly relative to the axis of the input transports. The number of said manipulations for grouping the rows depends on the number of rows and/or input transports, and an increase in the number of manipulations results in lower performance efficiency.

The second category provides the direct preparation of the full layer, wherein the products typically come from a set of conveyor belts on which one or more devices, such as Cartesian machines, anthropomorphic robots or others, rotate or divert the single packages, possibly also in groups of several packages, in order to compose the palletising pattern.

In this case, plant layouts involving preparation by sorter belts are possible, but are ineffective in the case of patterns involving product rotation.

These are therefore little flexible solutions in case of format or pattern change.

Full-layer preparation systems are usually provided with manipulation devices that operate in several ways.

Manipulation can be carried out by means of grippers of various types, for example provided with mechanically clamped retaining rails, or through systems based on vacuum generation by means of gripping planes.

However, vacuum devices have a limited field of application, as they are effective only for certain types of products.

In the case of mechanical-type grip, the side rails of the grippers are designed according to the length of the groups to be manipulated and, generally, only allow for clamping operations.

This represents a significant limitation when it is necessary to manage, for the same type of product, groups with a variable number of packages.

The use of long side rails allows to manipulate groups with a high number of packages, however, in the presence of short groups, (in some cases consisting of only one package) it implies creating a spacing between them, due precisely to the dimension of the long rails, compromising the performance of the preparation system.

In contrast, short side rails, while offering a more suitable grip for single packages, do not allow to manage multiple groups, also limiting the overall performance efficiency.

To overcome these limitations, some operators provide side rails of different lengths to be replaced according to the format being processed. However, in addition to the burden of manual changeover, this solution does not allow to fully optimise the production flow in case both a single package and groups with a large number of packages have to be manipulated to form a same layer.

### EXPOSURE AND ADVANTAGES OF THE INVENTION

The problem underlying the present invention is to make available a manipulator apparatus for handling articles with variable geometry, designed to overcome, at least in part, one or more of the above-mentioned limitations with reference to the above-mentioned prior art.

In particular, it is the object of the present invention to provide a manipulator apparatus for handling articles with variable geometry capable of dynamically adapting to any type of package group.

It is therefore the object of the present invention to provide a manipulator apparatus for handling articles with variable geometry that improves the flexibility of the system by making it capable of adapting to a wide range of package dimensions and to single and multiple grips.

A further object of the present invention is to provide a manipulator apparatus for handling articles with variable geometry, that allows to reach high operating rates.

Therefore, the result is a significant increase in productivity.

The above-mentioned problem and objects are solved by the present invention by means of a manipulator apparatus for handling articles with variable geometry comprising one or more of the features expressed in the following claims.

In particular, the present invention makes available a manipulator apparatus for handling articles with variable geometry to bring said articles from an initial arrangement to a final arrangement by means of a movement on a support surface so that a lower face thereof is always adhering to said surface.

Preferably, the apparatus comprises a handling device.

Preferably, the handling device is adapted to move a gripper above said support surface.

Preferably the handling device is adapted to rotate the gripper around an axis of rotation perpendicular to said surface.

Preferably said gripper comprises side rails.

Preferably said side rails are opposite to each other and engage on a side surface of said one or more articles.

Preferably said side rails mainly extend in length according to a longitudinal direction and preferably in height according to a vertical direction.

Preferably said side rails automatically vary their length in the longitudinal direction between a minimum and a maximum dimension.

Preferably the side rails are movable between a position moving closer to and a position moving away from each other to contact/release groups of articles.

Preferably the apparatus comprises an actuating device configured to automatically vary the length of said side rails.

Preferably, the actuating device acts by varying the length of a single side rail or of both side rails simultaneously.

Preferably, the side rails of the gripper have a length such that they engage on the side surface of groups of articles placed side by side to each other.

Preferably, the apparatus comprises one or more feed conveyors that introduce the articles onto the support surface according to a feed direction.

Preferably the support surface is movable and advances according to the feed direction.

In particular, the present invention makes available a gripper installable on the manipulator apparatus for handling articles with variable geometry.

Preferably the gripper installable on the apparatus comprises opposite side rails that engage on a side surface of said articles.

Preferably, said side rails mainly extend in height in a vertical direction and in length in a longitudinal direction.

Preferably said side rails automatically vary their length between a minimum and a maximum dimension.

In particular, the present invention makes available a method for handling articles by means of a manipulator apparatus for handling articles with variable geometry.

Preferably, said method provides to bring said articles from an initial arrangement to a final arrangement.

Preferably, said method provides to position side rails of a gripper in contact with two opposite sides of a side surface of said one or more articles.

Preferably, said method provides to move according to and/or rotate said articles on a support surface so that a lower face thereof is always adhering to said surface.

Preferably, said method provides to automatically vary the length of said side rails between a minimum and a maximum dimension according to the size of the surface that the side rails contact.

Preferably said method provides to vary the length of said side rails.

Preferably said method provides to vary the length of said side rails after the gripper has released the article.

Preferably, said method provides to vary the length of said side rails during the returning step of the gripper to the direction opposite to the feed direction in order to return to position for the following grip.

Optionally, said method provides to vary the length of said side rails after the gripper has finished manipulating the current group of articles, taking into account the position of the gripper and of all the groups of articles present on the support surface so as to leave as much time as possible for the apparatus to adapt the length of the side rails to the one desired for the next group of articles.

These and other objects are reached thanks to the features of the invention as set forth in the independent claims. The dependent claims outline preferred and/or particularly advantageous aspects of the invention.

Said objects and advantages are all achieved by the manipulator apparatus for handling articles with variable geometry, subject matter of the present invention, which is characterized by what is provided for in the following claims.

### BRIEF DESCRIPTION OF THE DRAWINGS

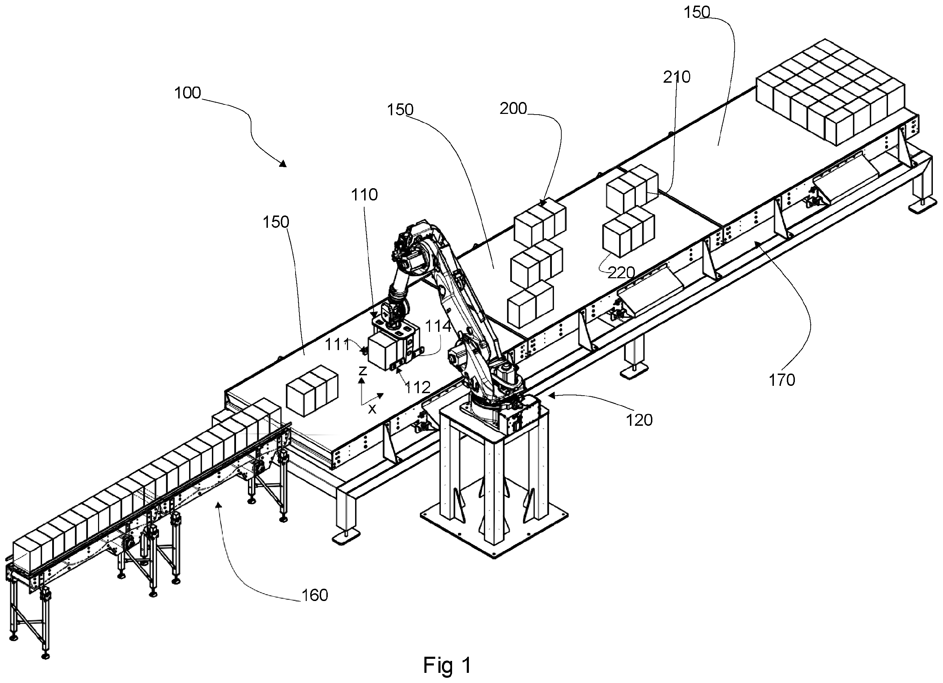

- Figure 1: illustrates in an axonometric view a manipulator apparatus with a variable-length gripper;
- Figure 2a, 2b: schematically illustrates the amount of space taken for manipulating one or more packages with a gripper of a known type and with a gripper according to the invention;
- Figure 3a, 3b, 3c, 3d: schematically illustrates a simulation of a layer formation according to a pattern A performed with a gripper of the known type and a gripper according to the invention;
- Figure 4a, 4b, 4c, 4d: schematically illustrates a simulation of a layer formation according to a pattern B performed with a gripper of the known type and a gripper according to the invention.

### DESCRIPTION OF THE INVENTION

With particular reference to the figures, 100 denotes a manipulator apparatus for handling groups of articles or packages 200.

Said articles can be cartons, crates, bundles, sacks, but also single containers.

In particular, the manipulator apparatus 100 is configured to handle articles, and more precisely groups of articles 200 as will be better explained below, to bring them from an initial arrangement to a final arrangement by moving them on a support surface 150.

In particular, the formation of the layer takes place on said support surface 150.

Said movement takes place so that a lower face 220 of said groups of articles 200 is always adhering to said surface 150.

Therefore, the groups of articles 200 are not lifted, but moved while resting on the surface 150.

According to an aspect of the invention, the manipulator apparatus 100 comprises a handling device 120 adapted to move a gripper 110 above said support surface 150.

Preferably the handling device 120 is also configured to rotate the gripper 110 around an axis of rotation perpendicular to said surface 150.

Said handling device 120 may comprise a duopod robot, a delta robot, an anthropomorphic robot, or a Cartesian structure.

The manipulator apparatus 100 may comprise a plurality of handling devices 120 each of which is associated with a respective gripper 110.

This makes it possible to increase the cadence of the manipulator apparatus 100.

According to an aspect of the invention said manipulator apparatus 100 comprises one or more feed conveyors 160 which introduce the articles into the area where the gripper 110 operates.

In particular, said feed conveyors 160 precede the support surface 150.

Said feed conveyors 160 regulate the entry of packages, cadencing them so as to facilitate subsequent manipulation thereof.

According to an operating aspect of the invention, the articles are arranged in sequence on each feed conveyor 160.

In particular, the articles in sequence on the feed conveyor 160 can be in contact with each other or spaced apart from each other.

One possible embodiment could provide that on said one or more feed conveyors 160 the articles are in contact with each other and are configured to create groups of articles 200 which, entering on the support surface 150, are manipulated by the gripper 110.

In a further possible embodiment, on said one or more feed conveyors 160 the articles are spaced from each other and in this case the groups of articles 200 will be formed by the gripper 110.

The term groups of articles 200 means either a grouping of several adjacent articles or a single article; said groups of articles 200 are defined by a spacing S spacing them apart from each other to allow them to be properly manipulated by means of the gripper 110.

More generally, we will speak of articles when they are on the feed conveyors 160 while we will speak of groups of articles 200 when they are on the support surface 150.

Articles that are to be manipulated with a single grip are entered adjacent to each other forming a group of articles 200.

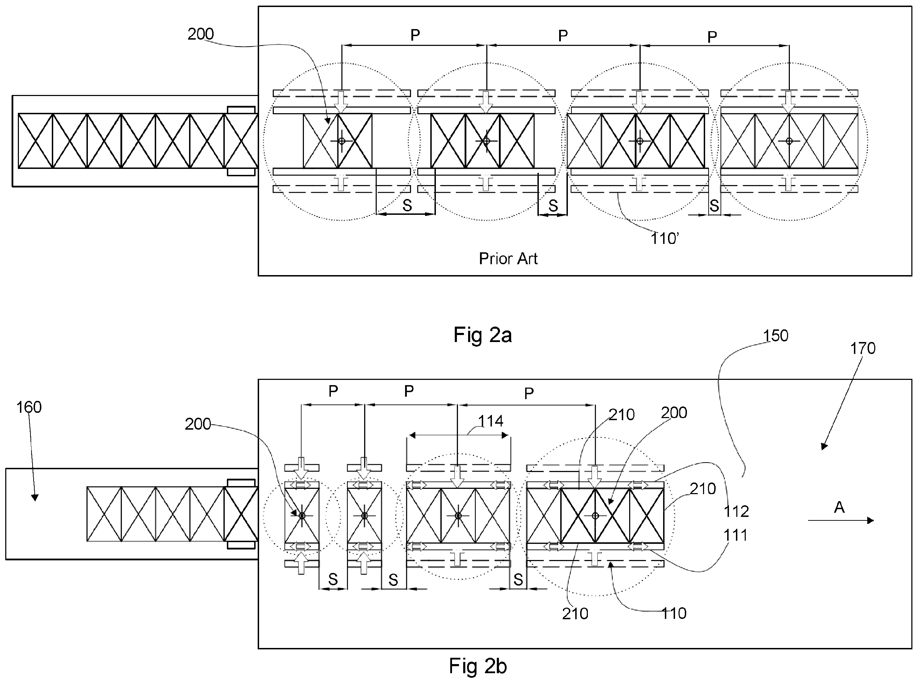

Said groups of articles 200 are manipulated by means of separate grips and are introduced as separate from the next by creating the spacing S and defining a pitch P between the groups of articles 200 of separate grips, as represented in Figure 2a and 2b.

The spacing S, between groups 200 to be manipulated with separate grips, is closely related to the dimensions of the gripper 110 as will be further explained below.

We won't go into the details of how to achieve spacing or compaction between articles, as there are several solutions known to a person skilled in the art, and in any case it is not a limiting aspect of the invention.

Said one or more feed conveyors 160, on which the articles are placed, advance according to a feed direction A directed towards the support surface 150.

Once the groups of articles 200 have been introduced on the support surface 150, they can be taken over by the manipulator apparatus 100.

According to a preferred embodiment, the support surface 150 can be the top surface of a layer forming table 170.

Preferably, therefore, said support surface 150 is movable and advances according to the feed direction A.

Therefore, the speed of the gripper 110 is synchronised with the feed speed of said support surface 150, to optimise the grip of the groups of articles 200.

A preferred embodiment provides that said gripper 110 comprises opposite side rails 111, 112.

In particular, said side rails 111, 112 engage on a side surface 210 of said one or more groups of articles 200.

Preferably said side rails 111, 112 mainly extend in length 114 according to a longitudinal direction X and preferably also in height 113 according to a vertical direction Z.

Generally, the thickness of said side rails 111, 112 is thinner than the two previous dimensions.

One aspect of the invention provides that the side rails 111, 112, are movable between a position moving closer to and a position moving away from each other wherein they contact or release the groups of articles 200.

The movement of the side rails 111, 112 closer to each other makes it possible to contact the groups of articles 200 to retain them during their movement until they reach the final position in order to form the palletising pattern.

The movement of the side rails 111, 112 closer to/away from each other can be carried out by motorised or pneumatic means, etc.

According to an aspect of the invention, said side rails 111, 112, automatically vary their length 114 according to the longitudinal direction X, between a minimum and a maximum dimension.

Preferably their length 114 can assume all intermediate dimensions comprised between said minimum and maximum dimension.

Preferably, the side rails 111, 112 of the gripper 110 have a length 114 such that they engage on the side surface 210 of the groups of articles 200.

The side rails 111, 112 may have such a length 114 as to make it possible to grip a group of articles 200 both at the long side and short side.

Preferably, the manipulator apparatus 100 comprises an actuating device configured to automatically vary the length 114 of said side rails 111, 112.

Said actuating device may be an actuator of the electric, pneumatic, hydraulic type and so on.

Optionally, the actuating device acts by varying the length 114 of a single side rail 111, 112.

In this case, the mechanical solution can be simplified.

Alternatively, the actuating device acts by varying the length 114 of both side rails 111, 112 simultaneously. This allows for a solution that guarantees a synchronised variation of the length 114 of both side rails 111, 112.

Said actuating device acts so that the variation in length 114 can assume any dimension between the minimum and maximum dimensions.

Said variation in length 114 occurs dynamically, i.e. during the movement of the gripper 110 over the surface 150.

Still in order to optimise the operating times of the manipulator apparatus 100, the variation in the length 114 of the side rails 111, 112 preferably takes place after the gripper 110 has positioned and released the group of articles 200, preferably during the returning step of the gripper 110 in the direction opposite to the feed direction A in order to return to position for the following grip.

In particular, if, according to the palletising pattern, the gripper 110 is expected to grip a group of articles 200, the length 114 of the side rails 111, 112 increases to ensure that all the articles of the group 200 are retained.

Conversely, if a group 200 consisting of a single article is to be gripped, the length 114 of the side rails 111, 112 can be shortened to reduce the manipulation space of the gripper 110.

Preferably said length 114 varies so that the sides 112, 111 do not protrude from the group of articles 200 that the gripper 110 is manipulating.

This ability to adapt the length 114 of the gripper 110 makes it possible to reduce the spacing S between the groups of articles 200 that must be manipulated with separate grips.

Therefore, compared to the prior art, the groups of articles 200 are introduced on the support surface 150, with a shorter spacing S occupying a smaller overall space.

This makes it possible to reduce the speed of the layer forming table 170.

This has the additional consequence of increasing the number of manipulations that can be carried out with the manipulator apparatus 100.

In other words, the maximum speed of the manipulator apparatus 100, measured in groups 200 manipulated per minute, depends on the speed of the layer forming table 170.

The manipulation time is in fact given by the sum of the handling time of the group of articles 200, and the return time of the gripper 110 without the group 200.

More precisely, the time for handling the group of articles 200 is given by time taken to the gripper 110 for gripping, moving and/or rotating and going back out of the working space (data dependent on the mechanical and control characteristics).

The return time of the gripper 110 is the shorter the lower the speed of the layer forming table 170, as the path travelled by the gripper 110, in the feed time synchronised with the layer forming table 170, is the shorter the lower the speed of said layer forming table 170.

In other words, going at low speed, when the gripper 110 goes back it has to travel much less distance than if it was going at high speed.

Below are some examples that better clarify the advantages of the invention by comparing it with a known solution with a gripper 110' having fixed-length side rails.

In the figures, the behaviour of a manipulator apparatus with fixed geometry is illustrated compared to one with variable-length geometry that is the subject of the invention.

In the case of the fixed-length gripper 110', the spacing S between grips remains constant, regardless of the size of the group of packages 200 to be manipulated, as it is constrained by the geometry of the fixed-length gripper 110' itself.

Consequently, if, as represented in Figure 2a, the length of the fixed-length gripper 110' must be such to be able to manipulate a group of four articles 200, this results in the fixed-length gripper 110' taking up a large amount of space.

Therefore, this large amount of space makes it necessary to increase the cadence distance when feeding the groups of packages 200.

Furthermore, especially as the number of packages in the group 200 to be manipulated at each grip decreases, a greater separation is created between groups of packages 200 than the one that would be required with a variable-length gripper 110.

In fact, on the contrary, as represented in Figure 2b by adopting a gripper 110 with a variable length 114, the system dynamically adapts to the length of the group of packages 200, optimising the required manipulation pitch.

Thus, thanks to the invention, the cadence distance when feeding groups of packages 200 is no longer dependant on the length 114 of the gripper 110, but only on the dimension of the group of packages 200 to be manipulated.

A comparison of Figures 2a and 2b clearly and unequivocally shows the reduction in space and consequently time for manipulating the same groups of articles 200.

This approach, according to the invention, increases the flow of packages and improves the overall efficiency of the process.

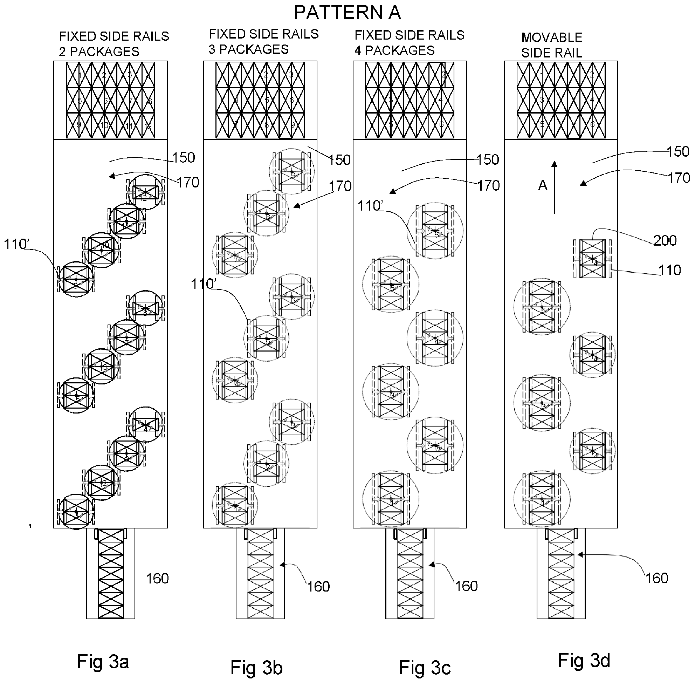

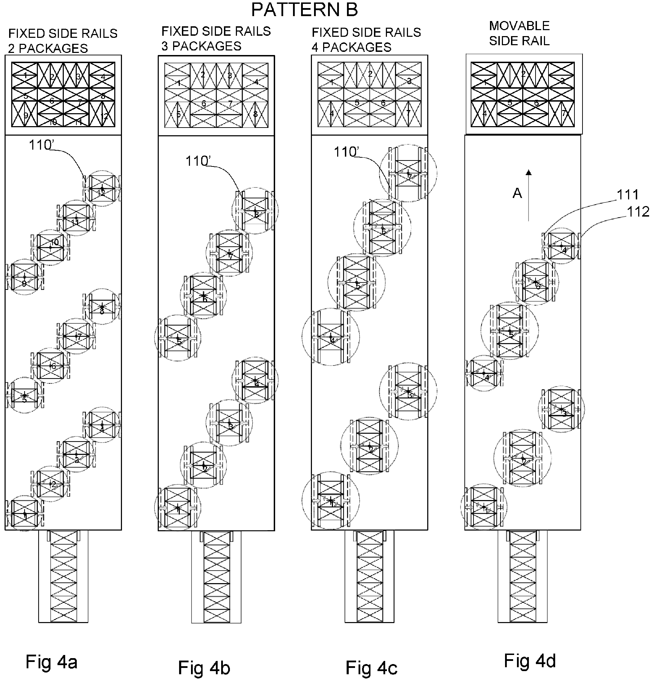

The following is a specific example relating to two different palletising patterns, pattern A and pattern B of a bundle or box of dimensions 340(L)x170(W) on a pallet 1000x1200 mm wherein the use of the variable-length gripper 110 according to the invention and the fixed-length gripper 110' according to the prior art is compared.
- Pattern A shown in Figure 3a, 3b, 3c, 3d: On a 1000x1200 mm pallet, the product is arranged according to a 7x3 pattern, with a total of 21 bundles per layer.
- Pattern B shown in Figure 4a, 4b, 4c, 4d: On a pair of 800x600 mm mini-pallets, the arrangement follows a pattern with a total of 20 bundles per layer.

Assuming a constant spacing S of 50 mm between the groups of packages 200 to be manipulated, Figure 3a, 3b, 3c, 3d allows to compare three configurations with fixed-length gripper 110' with a configuration with a gripper 110 with variable length 114, with reference to Pattern A.

Figure 3a represents the first configuration in which the gripper 110' has side rails with a fixed length, and in particular, said length is such to allow to grip groups 200 of two packages placed side by side to each other on the long side, i.e. a side rail with a length of approximately 300-340 mm.

In this case, in order to make each of the three rows forming the layer, they are provided three grips of groups 200 of two packages placed side by side on the long side and one grip of a group 200 of one package only. Therefore 12 grips are globally performed to form the complete layer. Figure 3a shows the space required to carry out the arrangement of the rows, before they are compacted, which is approximately 4680 mm.

Figure 3b represents the second configuration in which the gripper 110' has sides rails with a fixed length, and in particular, said length is such to allow to grip groups 200 of three packages placed side by side to each other on the long side, i.e. a side rail with a length of approximately 500 mm.

In this case, in order to make each of the three rows forming the layer, they are provided two grips of a group of two packages 200 placed side by side on the long side and one grip of a group of three packages 200 placed side by side on the long side. Therefore 9 grips are globally performed to form the complete layer. Figure 3b shows the space required to carry out the arrangement of the rows, before they are compacted, which is approximately 5040 mm.

The space required for formation is greater than in the first configuration because although the number of grips has been reduced, the larger size of the fixed-length gripper 110' has a major impact on the distance between one grip and the next.

Figure 3c represents the third configuration in which the gripper 110' has side rails with a fixed length, and in particular, said length is such to allow to grip groups 200 of four packages placed side by side to each other on the long side, i.e. a side rail with a length of approximately 650-680 mm.

In this case, in order to make each of the three rows forming the layer, they are provided a grip of a group 200 of four packages placed side by side on the long side and one grip of a group 200 of three packages placed side by side on the long side. Therefore 6 grips are globally performed to form the complete layer. Figure 3c shows the space required to carry out the arrangement of the rows, before they are compacted, which is approximately 4330 mm.

The space required for formation is less than the previous ones as the number of grips is reduced.

Figure 3d represents the configuration in which the gripper 110 has side rails 111, 112 with variable length 114 to allow optimised grip of either a single-package group 200 or a group 200 of up to four packages placed side by side to each other on the long side, i.e. a side rail 111, 112 with a length 114 capable of extending from approximately 150mm to approximately 680 mm.

In this case, in order to make each of the three rows forming the layer, they are provided a grip of a group 200 of four packages placed side by side on the long side and one grip of a group 200 of three packages placed side by side on the long side. Therefore 6 grips are globally performed to form the complete layer. Figure 3d shows the space required to carry out the arrangement of the rows, before they are compacted, which is approximately 3870 mm.

The space required for formation is therefore less than all the previous configurations as the number of grips is the same as in the third case, but the reduction in length 114 of the gripper 110 while gripping a group 200 of three packages allows to further reduce the formation space.

Similarly, Figure 4a, 4b, 4c, 4d shows the corresponding records for Pattern B.

Assuming a constant pitch of spacing S of 50 mm between the groups of packages 200 to be manipulated, Figure 4a, 4b, 4c, 4d allows to compare three configurations with fixed-length gripper 110' with a configuration with a gripper 110 with a variable-length 114, with reference to Pattern B.

Figure 4a represents the first configuration in which the gripper 110' has side rails with a fixed length, and in particular, said length is such to allow to grip groups 200 of up to two packages placed side by side on the long side, i.e. a side rail with a length of approximately 300-340 mm.

In this case, 12 grips are performed to make the complete layer. Figure 4a shows the space required to carry out the arrangement of the rows, before they are compacted, which is approximately 4678 mm.

Figure 4b represents the second configuration in which the gripper 110' has side rails with a fixed length, and in particular, said length is such to allow to grip groups 200 of up to three packages placed side by side to each other on the long side, i.e. a side rail with a length of approximately 500 mm.

In this case, 8 grips are performed to make the complete layer. Figure 4b shows the space required to carry out the arrangement of the rows, before they are compacted, which is approximately 4480 mm.

The space required for formation is less than the previous one as the number of grips is reduced.

Figure 4c represents the third configuration in which the gripper 110' has side rails with a fixed length, and in particular said length is such to allow the grip of groups 200 of up to four packages placed side by side to each other on the long side, i.e. a side rail with a length of approximately 650-680 mm.

In this case, 7 grips are performed to make the complete layer. Figure 4c shows the space required to carry out the arrangement of the rows, before they are compacted, which is approximately 5050 mm.

The space required for formation is greater than in the first and second configurations as, although the number of grips has been reduced, the larger size of the fixed-length gripper 110' has a major impact on the distance between one grip and the next.

Figure 4d represents the configuration in which the gripper 110 has side rails 111, 112 with variable length 114 to allow optimised grip of either a single-package group 200 or a group 200 of up to four packages placed side by side to each other on the long side, i.e. a side rail 111, 112 with a length 114 capable of extending from approximately 150mm to approximately 680 mm.

In this case, 7 grips are performed to make the complete layer. Figure 4d shows the space required to carry out the arrangement of the rows, before they are compacted, which is approximately 3919 mm.

The space required for formation is therefore less than in all the previous configurations as the number of grips is the same as in the third case, but the reduction in the length 114 of the gripper 110 while gripping groups 200 of two or three packages further reduces the formation space.

In other words, the advantage of the invention can be that a same layer can be formed by manipulating groups of articles 200 with as few grips as possible and with the smallest space required.

Therefore, in order to better understand the advantages of the invention, the various solutions should be compared by considering both the total number of manoeuvres and the space required for both patterns A and B. Fewer manoeuvres or a reduction in the area occupied allow to manipulate a greater number of groups of packages 200 at the same conveyor speed.

Referring to the Table reported below, it is possible to rationalise what can already be graphically seen by imagining the formation of two different layers.

| Description | Fixed side rails 2 packages | Fixed side rails 3 packages | Fixed side rails 4 packages | Variable-length side rails 2-4 |
|---|---|---|---|---|
| Number of packages gripped in the gripper | 2 | 3 | 4 | 2-4 |
| Side rail length**[W]** | 340 | 510 | 680 | |
| Total manipulations **[T]** | 24 | 17 | 13 | 13 |
| Spacing S between packages **[S]** | 50 | 50 | 50 | 50 |
| Space required to form a layer **[SS]** | 9360 | 9520 | 9490 | 7620 |
| Total packages manipulated | 41 | 41 | 41 | 41 |

The table consists of 4 columns, each corresponding to one of the described configurations, the "length" field corresponds to the sum of the dimensions of the side to be manipulated (W), in the analysed case 170 mm, the total manipulations [T] correspond to the sum of the manipulations required to compose both patterns (A+B), the spacing S is a constant. It follows that the space required is given by the formula ***SS= T ×* (*W* × S)**

In order to carry out in sequence pattern A and pattern B, in the configurations with fixed side rail gripper 110', a minimum of 13 manipulations (4-package grip) and a minimum space of 9,360 mm (2-package grip) are observed.

It is clear that using a gripper 110 with variable geometry (from 2 to 4) offers an advantage: while maintaining the minimum of 13 manoeuvres, the space required is reduced by around 20% switching to 7620 mm.

The comparison between the configurations with the gripper 110' with fixed side rails and the configuration with the gripper 110 with variable side rails clearly and unequivocally shows the reduction in space and consequently time for manipulating the same groups of articles 200.

It is also an object of the invention to provide a method for handling articles by means of the manipulator apparatus 100 and to bring said groups of articles 200 from an initial arrangement to a final arrangement.

Said method provides to position the side rails 111, 112 of the gripper 110 in contact with two opposite sides of the side surface 210 of said groups of articles 200, and to move according to and/or rotate said groups of articles 200 on the support surface 150 so that a lower face 220 thereof is always adhering to said surface 150.

The method preferably provides to automatically vary the length 114 of said side rails 111, 112, between a minimum and a maximum dimension according to the dimension of the surface 210 that the side rails 111, 112 contact.

Preferably the method provides to vary the length 114 of said side rails 111, 112 after the gripper 110 has released the group of articles 200, preferably during the returning step of the gripper 110 to the direction opposite to the feed direction A in order to return to position for the following grip.

According to an aspect of the invention, the method provides to vary the length 114 of said side rails 111, 112, after the gripper 110 has finished manipulating the current group of articles 200.

This occurs by taking into account the position of the gripper 110 and of all the groups of articles 200 present on the support surface 150 so as to leave as much time as possible for the apparatus 100 to adapt the length 114 of the side rails 111, 112 to the one desired for the following group of articles 200.

For example, if it is provided to reduce the length 114 for the grip of the following group of articles 200, this variation can be made immediately without any special checks, whereas if it is provided to increase the length 114 for the grip of the following group of articles 200, this variation is only made if the space around allows it.

Therefore, it is necessary to check the position of the gripper 110 and of all the groups 200 present on the support surface 150.

It is understood however that what is described above has an illustrative and non-limiting purpose, therefore, possible variants of detail that may be necessary for technical and/or functional reasons, are considered from now falling within the same protective scope defined by the claims indicated below.

## Claims

1. Manipulator apparatus (100) for handling articles in order to bring said articles from an initial arrangement to a final arrangement by means of a movement on a support surface (150) so that a lower face (220) thereof is always adhering to said surface (150), comprising a handling device (120) adapted to move a gripper (110) above said support surface (150) and preferably to rotate it about an axis of rotation perpendicular to said surface (150), said gripper (110) comprising opposite side rails (111, 112) engaging on a side surface (210) of said one or more articles and/or groups of articles (200), said side rails (111, 112) mainly extend in length (114) according to a longitudinal direction (X) and preferably in height (113) according to a vertical direction (Z), **characterised in that** said side rails (111, 112), automatically vary their length (114), according to a longitudinal direction (X), between a minimum and a maximum dimension.

2. Manipulator apparatus (100) according to claim 1, wherein the side rails (111, 112), are movable between a position moving closer to and a position moving away from each other to contact/release groups of articles (200).

3. Manipulator apparatus (100) according to any one of the preceding claims comprising an actuating device configured to automatically vary the length (114) of said side rails (111, 112).

4. Manipulator apparatus (100) according to claim 3, wherein the actuating device acts by varying the length (114) of a single side rail (111, 112) or of both side rails (111, 112) simultaneously.

5. Manipulator apparatus (100) according to any one of the preceding claims wherein the side rails (111, 112) of the gripper (110) have a length (114) such that they engage on the side surface (210) of groups of articles (200) placed side by side.

6. Manipulator apparatus (100) according to any one of the preceding claims comprising one or more feed conveyors (160) which introduce the articles onto the support surface (150) according to a feed direction (A).

7. Manipulator apparatus (100) according to any one of the preceding claims wherein the support surface (150) is movable and advances according to the feed direction (A).

8. Gripper (110) installable on the apparatus (100) according to claim 1, comprising opposite side rails (111, 112) engaging on a side surface (210) of said one or more articles and/or groups of articles (200), said side rails (111, 112) mainly extend in length (114) according to a longitudinal direction (X) and preferably in height (113) according to a vertical direction (Z), **characterised in that** said side rails (111, 112), automatically vary their length (114) between a minimum and a maximum dimension.

9. Method for handling articles by means of a manipulator apparatus (100) according to claim 1, which provides to bring said articles from an initial arrangement to a final arrangement, said method provides to position the side rails (111, 112) of a gripper (110) in contact with two opposite sides of a side surface (210) of said one or more articles and/or groups of articles (200) and move according to and/or rotate said groups of articles (200) on a support surface (150) so that a lower face (220) thereof is always adhering to said surface (150), **characterised in that** it provides to vary the length (114) of said side rails (111, 112), in an automatic manner between a minimum and a maximum dimension according to the dimension of the surface (210) that the side rails (111, 112) contact.

10. Method according to claim 9 which provides to vary the length (114) of said side rails (111, 112), after the gripper (110) has released the group of articles (200), preferably during the returning step of the gripper (110) to the direction opposite to the feed direction (A) in order to return to position for the following grip.

11. Method according to any one of claims 9 or 10, which provides to vary the length (114) of said side rails (111, 112), after the gripper (110) has finished manipulating the current group of articles (200), taking into account the position of the gripper (110) and of all the groups of articles (200) present on the support surface (150) so as to leave as much time as possible for the apparatus (100) to adapt the length (114) of the side rails (111, 112) to the one desired for the following group of articles (200).
